# EUROPEAN PATENT SPECIFICATION

(11) **EP 1 693 057 B1**
(45) Date of publication and mention of the grant of the patent: **03.10.2007**
(21) Application number: 05003512.0
(22) Date of filing: 18.02.2005
(51) Int. Cl.: A61K 9/68

(54) **Confectionery products containing caffeine**
Coffein enthaltendes Konfekt
Confiserie contenant de la cafféine

(43) Date of publication of application: 23.08.2006
(73) Proprietor: THE PROCTER & GAMBLE COMPANY, Cincinnati, Ohio 45202 (US)
(72) Inventor: Lorenzi, Marc Paul, Egham, Surrey, TW20 8HG (GB); Cahen, Christine Marie, Virginia Water, Surrey, GU25 4AN (GB); Fee, Jenny Elizabeth, Staines, Middlesex, TW18 3DP (GB)
(74) Representative: L'Huillier, Florent Charles

(56) References cited:
- WO-A-97/02273
- US-A- 5 273 754
- US-A1- 2002 197 317
- US-B1- 6 280 762
- US-B1- 6 306 429

## Description

### FIELD OF THE INVENTION

The present invention relates to confectionery compositions comprising a xanthine derivative and flavouring sensate systems for reducing the perception of the xanthine derivative. The compositions herein comprise both a cooling composition and a warming composition in distinct and discrete regions of the composition, preferably in the shell and filling respectively of a centre filled drop, so that sequential release of the compositions is obtained when the drop is sucked that effectively reduces the consumers perception of the xanthine derivative during use.

### BACKGROUND OF THE INVENTION

Xanthine derivatives, such as xanthine itself and caffeine are known as stimulants. Several products comprising caffeine exist for consumption to increase wakefulness and alertness. Caffeine is also the major stimulant found in a number of beverages including coffee and tea, and the increasingly popular stimulant drinks such as Red Bull^{™}. Confectionery-like products comprising caffeine are also available. EP0716853 describes sustained release caffeine formulations comprising a biodegradable matrix of at least one water-soluble material such as polyvinyl pyrrolidone. DE2336106 discloses sugar-based confectionery comprising caffeine. WO00/06127 discloses centre-fill confectionery compositions comprising caffeine from Guarana extract in the shell.

However, whilst these documents disclose compositions comprising caffeine, a notable barrier to consumer acceptance of confectionery-like caffeine compositions is the bitter taste associated with caffeine that is further increased when presented in a form that is meant to be consumed by prolonged exposure to the oral cavity i.e. by sucking. The problem is further exacerbated by the fact that mucous membranes are believed to be highly permeable to caffeine. As the buccal mucosa is believed to be highly permeable to caffeine, this may exacerbate the problem. Whilst this is a reason for wanting to deliver caffeine in a form that is trans-mucosally absorbed in the oral cavity, thereby delivering the caffeine to the blood stream directly and avoiding first pass metabolism, it results in the caffeine taste being highly perceived by the user, and the flavour residence time is increased. The strength of the caffeine flavour is such that the compositions cannot contain significant levels sufficient to deliver a noticeable stimulatory effect similar to that of a cup of coffee or a tablet ingested directly and designed for gut absorption. A need exists for suitably masking the taste associated with caffeine administered in a confectionery format and exposed to the oral cavity for a prolonged time. In US 2002/197317 it is proposed to mask such composition with a coating.

### SUMMARY OF THE INVENTION

The present invention provides confectionery compositions that effectively mask the flavour associated with a xanthine derivative comprised therein. The compositions herein can incorporate a xanthine derivative at levels required to induce a stimulant effect that is released over a prolonged time as the confectionery is consumed by sucking in the user's mouth. A confectionery composition is provided comprising:
a. a xanthine derivative:
b. a cooling composition comprising a physiological cooling agent which has an average threshold for a reported cooling effect of 100µg or less amongst a test panel selected to have an average threshold for a reported cooling effect of 1-menthol of 0.25 µg; and
c. a warming composition comprising a physiological warming agent which has an average threshold for a reported warming effect of 100 µg or less amongst a test panel selected to have an average threshold for a reported warming effect of benzyl alcohol of 0.25 µg,
wherein said cooling composition and said warming composition are located in distinct and discrete regions within said throat drop and said cooling and warming compositions being adapted to provide sequential release profiles.

### DETAILED DESCRIPTION OF THE INVENTION

Unless otherwise stated herein, all percentages are weight percentages.

Unless otherwise stated herein, all measurements are taken at 25°C.

The present invention provides confectionery compositions comprising a xanthine derivative, a cooling composition and a warming composition. The compositions are in distinct and discrete regions of the composition, preferably in the shell and filling respectively of a centre-filled drop, so that sequential release of the compositions is obtained when the drop is sucked that effectively reduces the consumers perception of the xanthine derivative during use. Examples of suitable product constructions providing differential release profiles are described in WO97/06695. Preferred for use herein, however, are centre-filled drops comprising a shell and a filling contained within the shell. The shell comprises a cooling or warming composition, and the filling comprises a warming composition if the shell comprises a cooling composition or a cooling composition if the shell comprises a warming composition.

The confectionery compositions of the present invention comprise a xanthine derivative. Xanthine derivatives are useful as stimulants. Xanthine derivatives useful in the present invention include those that conform generally to formula (I): 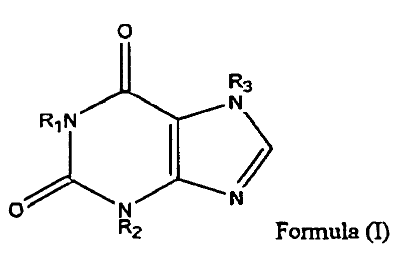 where R₁, R₂ and R₃ are independently selected from H or methyl, salts thereof and mixtures thereof. Non-limiting examples of xanthine derivative salts suitable for use herein include citrate, lactate and succinate salts. Preferred xanthine derivatives include:
Xanthine; where R₁, R₂ and R₃ in formula (I) above are all H;
Caffeine; where R₁, R₂ and R₃ in formula (I) above are all methyl;
Theobromine; where R₁ is H and R₂ and R₃ are both methyl; and
Theophylline; where R₁ and R₂ are both methyl and R₃ is H, salts of the aforementioned, and mixtures thereof. More preferably the xanthine derivative comprises caffeine, or salts thereof.

The confectionery compositions of the present invention may preferably comprise from about 0.01% to about 5% xanthine derivative by weight of the composition. Preferably the compositions herein comprise from about 0.05% to about 2.5% xanthine derivative, more preferably from about 0.1% to about 1% xanthine derivative. Preferably the confectionery composition comprises enough xanthine derivative to contain from about 1 mg to about 150 mg of xanthine derivative per individual confectionery unit, more preferably from about 5 mg to about 100mg, more preferably still from about 10 mg to about 50 mg xanthine derivative per individual confectionery unit.

The confectionery compositions of the present invention comprise a cooling composition and a warming composition that are located in distinct and discrete regions within the confectionery composition. The cooling and warming compositions are adapted to provide sequential release profiles. As used herein, adapted to provide sequential release profiles means that the compositions are chemically and/or physically modified relative to a homogeneous mix of the compositions, in order that the person ingesting the confectionery product can perceive the peak effect of the cooling agent at a different point in time to the peak sensation of warming. It will be understood that many such compositions will release the warming or cooling agent over the period of ingestion of the product and that there may be some simultaneous perception of warming agent and cooling agent.

By separating the peak effects of the cooling composition and the heating composition, the perception of caffeine bitterness is reduced effectively. Without wishing to be bound by theory, it is believed that the physiological cooling and warming agents act to reduce the perception of caffeine bitterness by not only masking the flavour, but further by reducing the consumers ability to actually detect the caffeine. Singly, the cooling or warming compositions herein are able to mask the caffeine bitterness for a brief period of time of first exposure to the consumer. However, it is believed that the caffeine bitterness has a greater residence time resulting in its perception being continued as the initial sensate impact begins to recede. Therefore, used singly, the cooling or warming compositions are not effective to mask the caffeine bitterness for the extended period of time required to make the composition consumer acceptable.

By positively separating the peak effects of cooling agent and warming agent, however, the overall organoleptic effect of the product is substantially improved. Without wishing to be bound by theory it is believed that by using contrasting cooling and warming compositions in a sequential release format the consumer's perception of caffeine is reduced to a greater extent, and for a longer period due to the contrast between the cooling and warming compositions. Such sequential release can conveniently be achieved within a centre-filled confection.

The confectionery compositions of the present invention comprise a cooling composition. An essential component of the cooling composition is a physiological cooling agent. Suitable levels of the cooling agent are from about 0.001 to about 10%, preferably from about 0.01 to about 5%, more preferably from about 0.01 to about 2%, more preferably still from about 0.01 to about 0-5% by weight of the throat drop composition. A test for physiological cooling agents is described in GB-A-1,452,291, published Oct. 13, 1976, is reproduced herein below for convenience.

The following test procedure can be used as a means to identify compounds having a physiological cooling activity. This test is intended purely as a means for identifying compounds having a physiological cooling agent activity and useful in the present invention and for giving an indication of the different relative activities of the compounds, as between themselves and as compared with 1-menthol, when applied in particular manner to a particular part of the body. The results are not necessarily indicative of the activity of these compounds in other formulations and other parts of the body where other factors come into play. For example, a controlling factor in the onset of cooling effect, its intensity and longevity will be the rate of penetration of the compounds through the epidermis and this will vary in different locations on the human body. The formulation of actual products according to this invention will therefore be done largely on an empirical basis although the test results and other figures given herein will be useful as a guide, particularly in the formulation of products for oral administration, since the test procedure to be described involves oral application of the compound. A similar test may, of course, be devised for the purposes of measuring the relative activities of the compounds of another area of the body, for example, the face or forearm, and this will be a useful guide in the choice of compounds to be used in preparations for external topical usage. It will also be noted that the described test procedure is done on a statistical basis. This is necessary since sensitivity to these compounds will vary not only from compound to compound and from one part of the body to another, but also from one individual to another. Tests of this nature are commonly used in the testing of the organoleptic properties e.g. taste and smell of organic and inorganic compounds, see Kirk-Othmer: Encyclopedia of Chemical Technology, 2nd Ed. (1967) Vol. 14, pages 336-344.

The following test procedure is aimed at determining the minimum quantity of the test compound required to produce a noticeable cooling effect in a person of average sensitivity, this minimum quantity being termed the threshold for that particular compound. The tests are carried out on a selected panel of 6 people of median sensitivity to 1-menthol.

To select a test panel of average sensitivity the following procedure is used. Known quantities of 1-menthol in solution in petroleum ether (bp. 40-60 °C.) are placed on 5 mm squares of filter paper, whereafter the solvent is allowed to evaporate. A panel of observers is enrolled and asked to place one impregnated square at a time on the tongue and to report on the presence or absence of a cooling effect. The quantity of 1-menthol on each impregnated square is gradually reduced from a value substantially above 0.25 µg. per square to substantially below 0.25 µg, the precise range being immaterial. Conveniently, one starts with squares containing 2.0 µg being half that of the preceding square, i.e. the second test square will contain 1.0 µg, the third 0.5 µg, and so on. Each quantity is tested on the tongue at least 10 times. In this way, the thresholds to cold receptor stimulus by 1-menthol are determined for each individual of the panel, the threshold for each individual being that amount of 1-menthol for which, in a series of not less than 10 test applications, a cooling effect is reported 50% of the time, Six panel members are now selected whose threshold to 1-menthol is in the range 0.1 µg to 10 µg and whose average threshold is approximately 0.25 µg, this select panel being regarded as the test panel of average sensitivity.

To test the activity of cooling agents, the above procedure is repeated using only the 6 selected panel members of average sensitivity to 1-menthol. The individual thresholds for each test compound on each of the 6 selected panel members are determined and averaged. Those compounds whose average threshold on the select test panel is 100 µg or less, preferably 50 µg or less are regarded as having cooling activity in accordance with this invention.

Suitable physiological cooling agents are described in WO97/06695. Preferred for use herein are physiological cooling agents selected from the group consisting of menthol, peppermint oil, N-substituted-p-menthane-3-carboxamides, acyclic tertiary and secondary carboxamides, 3-1-menthoxy propan-1,2-diol, monomenthyl glutarate and mixtures thereof. The carboxamides found most useful are those described in U.S. Pat. No. 4,136,163, Jan. 23, 1979 to Watson et al., and U.S. Pat. No. 4,230, 688, Oct. 28, 1980 to Rowsell et al. The carboxamides in U.S. Pat. No- 4,136,163 are N-substituted-p-menthane-3-carboxamides, such as N-ethyl-p-menthane-3-carboxamide, commercially available as WS-3 from Wilkinson Sword. The carboxamides of U.S. Pat. No. 4,230,688 are certain acyclic tertiary and secondary carboxamides, such as trimethyl isopropyl butanamide, commercially available as WS-23 from Wilkinson Sword. More preferred for use herein are monomenthyl glutarate, N-ethyl-p-menthane-3-carboxamide, trimethyl isopropyl butanamide and mixtures thereof, more preferably still monomenthyl glutarate, commercially available as Ultracool 2 from IFF (Netherlands).

The balance of the cooling composition may be made up of a suitable appropriate carrier, such as water, propylene glycol or a bulk sweetener, described in more detail below. The cooling composition can further comprise a warming agent as described herein provided that the predominant effect is one of cooling.

The confectionery compositions of the present invention further comprise a warming composition. An essential component of the warming composition is a physiological warming agent. Suitable levels of the warming agent are from about 0-001 to about 10%, preferably from about 0.005 to about 5%, more preferably from about 0.01 to about 1%, more preferably still from about 0.01% to about 0.5% by weight of the throat drop.

Physiological warming agents can be tested for using a modification of the test for cooling agents described above, the test being modified to use benzyl alcohol rather than menthol as the reference sample tongue and asking the panellists to report on the presence or absence of a warming effect rather than a cooling effect. Preferred physiological warming agents are those selected from the group consisting of vanillyl alcohol n-butyl ether, vanillyl alcohol n-propyl ether, vanillyl alcohol isopropyl ether, vanillyl alcohol isobutyl ether, vanillyl alcohol n-amino ether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, iso-propyl alcohol, iso-amylalcohol, benzyl alcohol, chloroform, eugenol, cinnamon oil, cinnamic aldehyde, phosphate derivatives thereof, and mixtures thereof. The phosphate derivatives mentioned are those described in WO 97/02273. A commercial example of a suitable warming agent for use herein is Optaheat (Symrise, Germany). The balance of the warming composition may be made up of a suitable appropriate carrier, such as water, propylene glycol or a bulk sweetener, described in more detail below. The warming composition can further comprise a cooling agent as described herein provided that the predominant effect is one of warming.

The confectionery compositions of the present invention may be in any confectionery form, including hard boiled sweets, soft boiled sweets, chewing gums, gummy-based sweets, centre-fill confectionery, or lollies. The confectionery compositions of the present invention preferably take the form of a centre-filled confectionery comprising from 60 to 95%, preferably from 75 to 85%, of an edible shell and from 5 to 40%, preferably from 15 to 25%, of an edible filling, by weight of the drop.

Where the confectionery composition is a centre-fill confectionery, the filling can be a solid, particularly a powder, or a liquid, including forms of intermediate consistency such as a paste or a gel. Preferably the filling is a non-aqueous filling comprising water at a level of less than 10%, preferably less than 8% more preferably still 6% or less water by weight of the filling.

The filling may preferably comprise a polar edible liquid. As used herein "polar edible liquid" includes materials that are liquid at room temperature (25°C), that are polar in nature at the molecular level (i.e. have "positive" and "negative" poles dependent upon the electrostatic nature of the atoms that constitute the molecule) and that are edible (i.e. that have no known toxicological side-effects and are sanctioned for use in human foods and medicine). Suitable examples of polar edible liquids useful herein include water, low molecular weight alcohols, polyhydric alcohols and mixtures thereof, preferably polyhydric alcohols. Non-limiting examples of polyhydric alcohols suitable for use herein include glycerin, low molecular weight (i.e. less than 1000MW) polyethylene glycols, propylene glycol and mixtures thereof, preferably glycerine. The filling of the present invention preferably comprises from about 30% to about 95% polar edible liquid or mixtures thereof by weight of the filling, more preferably from about 40% to about 90% and more preferably still from about 50% to about 85%, even more preferably still from about 40% to about 60% by weight of the filling.

Preferably the filling is a low water content or non-aqueous filling comprising water at a level of less than about 10%, preferably less than about 8% more preferably still about 6% or less water by weight of the filling. Without wishing to be bound by theory, it is believed that high levels of water may adversely affect the stability of the filling when comprised within the hard candy shell due to the solublisation and subsequent recrystallisation of sugars or sugar alcohols within the candy shell. This results in the filling becoming hard and crystalline, as well as the shell becoming opaque and susceptible to breakage.

The filling may further comprise a bulk sweetener, such as a sugar, to improve the palatability of the filling. Fillings may comprise from about 5 to 80%, preferably from about 30 to about 75% on a dry solids basis by weight of the bulk sweetener. A preferred source of the sweetener is high fructose corn syrup which, being commercially available as an 80% solids of which the balance is essentially water, can also provide some, or even all, of the water required by aqueous fillings, when employed. Sugar free compositions comprising a sugar alcohol such as sorbitol or xylitol can also be used in combination with artificial or natural high intensity sweeteners; non-limiting examples of high intensity sweeteners are sodium saccharin, potassium acesulfame, aspartame and sucralose.

The confectionery compositions may optionally comprise a filling that is shear thinning. Preferably the filling exhibits a log [(η @ 0.01s⁻¹)/ (η @ 250s⁻¹)] greater than about 0.5 at 37°C, measured according to the method set out below. Preferably the log [(η @ 0.01s⁻¹)/ (η @ 250s⁻¹)] ratio is greater than about 1, more preferably greater than about 5. The optimal centre fill should display a very high viscosity at low or zero shear but show a dramatic drop in viscosity when subjected to high shear rates. Without wishing to be bound by theory, it is believed that the shear thinning centre fills used herein provide multiple benefits for the confectionery fill. Firstly, it is believed that the shear thinning properties of the centre fill allow it to become semi-solid or solid following manufacture, cooling and storage. This slows the transfer of chemicals from the center fill to the shell, and thus improves the stability of the composition, avoiding problems such as liquid leakage through the candy shell and solubilisation of the candy shell that can cause the shell to recrystallise or become soft due to the permeation of the polar edible liquid from the fill.

However, solid centre fills are not as consumer acceptable as liquid ones. Therefore, it is required that the centre fill display shear thinning properties to allow it to reduce its viscosity substantially upon consumption as the consumer sucks the confectionery, and moves it around their mouth with their tongue, applying increased shear stress. This shear stress thins the centre fill upon release resulting in an impression of liquidity. However, it has been discovered that truly liquid centre fills (i.e. those not incorporating a thickener according to the present invention) do not deliver consumer acceptable consumption aesthetics. Specifically, truly liquid centre fills are quickly diluted in saliva, ingested and removed from the oral cavity rapidly. As a result, any flavours, sensates or active ingredients comprised within the centre fill are rapidly removed from the oral cavity, leading to reduced perception of activity or flavour. Without wishing to be bound by theory it is also believed that the shear-thinning centre fills herein act as muco-adherents, coating the centre fill over the oral mucosa, improving the residence time of the fill within the oral cavity. This has manifold advantages, including improving the imparted feeling on the oral cavity by coating it with thickened liquid, and ensuring that there is center fill remaining with the candy shell pieces after the center fill has been breached. Furthermore, perception of flavours and active ingredients is increased as the major mucosal surfaces (e.g. tongue, throat and buccal surfaces) are exposed to these ingredients for a prolonged time.

In order to achieve such shear thinning properties, the confectionery filling may optionally further comprise a thickener. To achieve the above attributes, the thickener should impart a high degree of pseudoplasticity to the filling, causing it to significantly decrease in viscosity as the shear rate is increased and also display muco-adherent properties. Polymeric thickeners which induce pseudoplasticity in the said formulations are preferred. Polymeric thickeners are generally high molecular weight materials which are straight chained or branched, they may also form cross-linked networks when hydrated. Shear thinning or pseudoplastic polymers impart a high viscosity when dissolved or dispersed in a polar liquid, and show a significant drop in viscosity under increased shear strain or shear rate.

Thickeners for use herein must be suitable for human consumption. Non-limiting examples of suitable thickeners include xantham gum, carrageenan and derivatives, gellan gum, hydroxypropyl methyl cellulose, sclerotium gum and derivatives, pullulan, rhamsan gum, welan gum, konjac, curdlan, carbomer, algin, alginic acid, alginates and derivatives, hydroxyethyl cellulose and derivatives, hydroxypropyl cellulose and derivatives, starch phosphate derivatives, guar gum and derivatives, starch and derivatives, co-polymers of maleic acid anhydride with alkenes and derivatives, ethylene glycol/propylene glycol co-polymers, long chain alcohols such as behenyl alcohol, poloxamers and derivatives, polyacrylates and derivatives, methyl cellulose and derivatives, ethyl cellulose and derivatives, agar and derivatives, gum arabic and derivatives, pectin and derivatives, chitosan and derivatives, high molecular weight polyethylene glycols such as polyethylene Glycols (molecular weight 10,000 and above), karaya gum, locust bean gum, natto gum, co-polymers of vinyl pyrollidone with alkenes, tragacanth gum, polyacrylamides, chitin derivatives, gelatin, betaglucan, dextrin, dextran, cyclodextrin, methacrylates, microcrystalline cellulose, polyquaterniums, furcellaren gum, ghatti gum, psyllium gum, quince gum, tamarind gum, larch gum, tara gum, talc, kaolin clay, bentonite clay, cellulose, fumed silica and mixtures thereof Preferred are xantham gum, carrageenan and derivatives, gellan gum, hydroxypropyl methyl cellulose, sclerotium gum and derivatives, pullulan, rhamsan gum, welan gum, konjac, curdlan, carbomer, algin, alginic acid, alginates and derivatives, hydroxyethyl cellulose and derivatives, hydroxypropyl cellulose and derivatives, starch phosphate derivatives, guar gum and derivatives, starch and derivatives, co-polymers of maleic acid anhydride with alkenes and derivatives, cellulose gum and derivatives, poloxamers and derivatives, polyquaterniums and mixtures thereof. More preferred are xanthan gum, carrageenan and derivatives, gellan gum, hydroxypropyl methyl cellulose, polyquaterniums and mixtures thereof, more preferably still xantham gum.

The filling compositions of the present invention preferably comprise from about 0.001% to about 10% thickener by weight of the fill. More preferably, the fill comprises the thickener at levels of from about 0.01% to about 5%, more preferably still from about 0.01% to about 2.5%, and even more preferably still from about 0.01% to about 1%.

The log viscosity ratio value at a fixed temperature, i.e., log [(η @ 0.01 s⁻¹)/ (η @ 250s⁻¹)], used herein is determined as follows. The individual viscosities, η, are determined at the respective shear rates using a viscometer (e.g., commercially available from TA Instruments, model number AR1000). The measurements can be made with a cone and plate arrangement. First, the center fill composition is loaded onto the rheometer at the temperature at which it would be filled at the candy production facility, the preferred temperature being 85°C, and the cone or parallel plate is applied to the sample leaving a 30mm 5° steel cone with a gap of 250 micrometers (µm). The plate is cooled to mucosal membrane temperature (37°C) and the center fill is allowed to equilibrate for 1 hour. The viscosity is measured using a rotation at an exponentially increasing shear rate from about 0.01 s⁻¹ to about 250s⁻¹ over 180 seconds. Furthermore, it is believed that a relatively large gap between cone and bottom plates of the rheometer should be used for this method to avoid misleading viscosity data due to large particles in the formulae (e.g. polymer lumps) or crystals which form during cooling.

When an aqueous centre-filling (i.e. greater than 10% water) is used, the centre-filled throat drops of the present invention may optionally also comprise from 0.001 to 10% by weight of the filling of a vesicle-forming agent which acts to form vesicles which are dispersed within the filling and encapsulate the warming or cooling agent as described in US6432441. By 'vesicle' is meant an essentially spherical structure comprising a lipid bilayer encapsulating a central core. The vesicles herein can be uni- or multi-lamellar and have a number average particle size of from about 1 to about 100 µm, more preferably from about 5 to about 50 µm. The particle size can be measured using an optical microscope, such as a Nikon Optiphoto 2, linked to an electronic image analysis system such as the Linkam MS100. Measurement can also be made using a graduated graticule in the field of view. EP-A-534,823, which describes anhydrous make-up compositions which can form vesicles on exposure to water gives a comprehensive list of amphiphilic liquids which can be used to form vesicles. For the throat drops herein it is of course preferable that food-grade materials are used and the preferred vesicle forming agents are natural phospholipids-such as egg or soy lecithin. The preferred phospholipids of the present invention are plant-derived lecithins and, especially, soybean lecithin. Soybean lecithin can act to form vesicles at very low levels. Preferably the vesicle forming agent is present at a level of from about 0.001 to about 1%, more preferably from about 0.005 to about 0.1% and especially from about 0.01 to about 0.05% by weight of the filling. With adequate mixing, in the presence of water and a warming or cooling agent as described herein, the lecithin forms vesicles which encapsulate the warming or cooling agent.

The palatability of the filling is substantially improved if the composition further comprises a bulk sweetener, non-limiting examples of which include sucrose or glucose, suitably at a level of from about 5 to 80%, preferably from about 30 to about 75% on a dry solids basis by weight of the filling. A preferred source of the sweetener is high fructose corn syrup which, being commercially available as an 85% active material of which the balance is essentially water, can also provide some, or even all, of the water required by aqueous fillings, when employed.

Sugar free compositions comprising a sugar alcohol such as sorbitol, xylitol, isomalt or maltitol can also be used. Preferably however, sugar alcohols are employed in admixture with glycerine, since it has been found that sugar alcohols on their own can suppress vesicle formation.

The fillings herein can also include a flavouring agent. As used herein, the term 'flavouring agent' means those flavour essences and equivalent synthetic ingredients which are added to the flavour composition for the principal purpose of providing flavour to the confectionery product. It excludes warming and cooling agents as described above. Flavouring agents well known in the confectionery art can be added to the flavour compositions of the invention. These flavouring agents can be chosen from synthetic flavouring liquid and/or oils derived from plants leaves, flowers, fruits and so forth, and combinations thereof. Representative flavouring liquids include: artificial, natural or synthetic fruit flavours such as lemon, orange, banana, grape, lime, apricot and grapefruit oils and fruit essences including apple, strawberry, cherry, orange, pineapple and so forth; bean and nut derived flavours such as coffee, cocoa, cola, peanut, almond and so forth; and root derive flavours such as licorice or ginger. The amount of flavouring agent employed is normally a matter of preference subject to such factors as flavour type, base type and strength desired. In general, amounts up to about 4% by weight are usable with amounts of from about 0.1% to about 1% being preferred.

The edible shell can be a chewing gum or a hard or soft candy, preferably it is a hard candy. Centre-filled chewing gums are described, for example, in U.S. Pat. No. 3.894,154. Centre-filled hard candies are described in U.S. Pat. No. 4,372,942 and U.S. Pat. No. 4,466,983. A suitable sugar base for a hard candy shell comprises from about 30% to about 85% glucose syrup and from about 15% to about 70% sucrose. Alternatively, a sugar-free base can be used for the shell. Suitable sugar-free bases include bulk sweeteners such as isomalt, maltitol and sorbitol. Isomalt and maltitol are preferred. The inner surface of the shell can also have a separate edible lining to prevent or reduce interaction of the filling with the shell. The edible shell can also further comprise flavours as described above. In preferred throat drops according to the invention the edible shell is a cooling composition comprising a cooling agent and the centre-fill is a warming composition comprising a warming agent.

Aqueous fillings can be made by straightforward mixing techniques. The general techniques for manufacturing centre-filled confectionery products can be found in the "Silesia Confiserie Manual No. 3", published by Silesia-Essenzenfabrik Gerhard Hanke K. G., Abt. Fachbucherei.

Centre-filled throat drops according to the invention can be manufactured by deposit, rope-forming and extrusion processes as known in the art. Extrusion and rope-forming processes are preferred. An example of an extrusion process is described in U.S. Pat. No. 5,458,894. An example of an extrusion process is described in U.S. Pat. No. 5,002,791.

The following examples are given to illustrate the compositions and uses according to the invention. However, the invention is not limited thereto.

### Example 1 (a) and (b)

### Pseudoplastic Center fill composition using Xantham gum and sucrose with Heating agent.

| | **a** | **b** |
|---|---|---|
| **Material Description** | **% w/w** | **% w/w** |
| GLYCERIN | 55.9750 | 55.9750 |
| GLUCOSE SYRUP (80% solids) | 30.0000 | 30.0000 |
| SUCROSE | 10.0000 | 10.0000 |
| CITRIC ACID ANHYDROUS | 3.0000 | 3.0000 |
| XANTHAN GUM | 0.2500 | 0.2500 |
| ANTHOCANINS (COLOURANTS) | 0.1500 | 0.1500 |
| HEATING AGENT: OPTAHEAT | 0.1500 | - |
| COOLING AGENT: ULTRACOOL 2 | - | 0.1500 |
| GUARANA EXTRACT | 0.1250 | 0.1250 |
| TAURINE | 0.1000 | 0.1000 |
| FLAVOURS | 0.2500 | 0.2500 |
| | 100.0000 | 100.0000 |

### Manufacturing instructions:

**Step 1** Weigh the Glycerine at room temperature into a suitable vessel
**Step 2** Add the Anthocyanins, Taurine + Guarana powders, mix until dispersed
**Step 3** Add the Xantham gum, mix until dispersed
**Step 4** Add the Glucose syrup preheated to 40°C, heat the batch whilst mixing to 80°C
**Step 5** Stop heating, add the Sucrose + Citric acid, mix until dissolved
**Step 6** Add the Flavours + Heating agent, mix for 10 minutes

### Example 2

### Pseudoplastic Center fill composition using Xantham gum and a Cooling agent

| **Material Description** | **% w/w** |
|---|---|
| GLYCERIN | 55.9750 |
| HIGH FRUCTOSE GLUCOSE SYRUP (80% solids) | 40.0000 |
| CITRIC ACID ANHYDROUS | 3.0000 |
| XANTHAN GUM | 0.2500 |
| ANTHOCANINS (COLOURANTS) | 0.1500 |
| COOLING AGENT: ULTRACOOL 2 (IFF) | 0.1500 |
| GUARANA EXTRACT | 0.1250 |
| TAURINE | 0.1000 |
| FLAVOURS | 0.2500 |
| | 100.0000 |

### Manufacturing instructions:

**Step 1** Weigh the Glycerine at room temperature into a suitable vessel
**Step 2** Add the Anthocyanins, Taurine + Guarana powders, mix until dispersed
**Step 3** Add the Xantham gum, mix until dispersed
**Step 4** Add the High fructose Glucose syrup preheated to 40°C, heat the batch whilst mixing to 80°C
**Step 5** Stop heating, add the Citric acid, mix until dissolved
**Step 6** Add the Flavours + Cooling Agent, mix for 10 minutes

### Example 3

### Substantially anhydrous pseudoplastic Center fill composition using Xantham gum.

| **Material Description** | **% w/w** |
|---|---|
| GLYCERIN | 76.08 |
| SUCROSE | 20.00 |
| CITRIC ACID ANHYDROUS | 3.0000 |
| XANTHAN GUM | 0.1500 |
| ANTHOCANINS (COLOURANTS) | 0.1500 |
| HEATING AGENT: OPTAHEAT | 0.1500 |
| GUARANA EXTRACT | 0.1250 |
| TAURINE | 0.1000 |
| FLAVOURS | 0.2500 |
| | 100.0000 |

### Manufacturing instructions:

**Step 1** Weigh the Glycerine at room temperature into a suitable vessel
**Step 2** Add the Anthocyanins, Taurine + Guarana powders, mix until dispersed
**Step 3** Add the Xantham gum, mix until dispersed
**Step 4** Heat the batch whilst mixing to 80°C, mix until Xantham gum is fully dissolved.
**Step 5** Stop heating, add the Sucrose + Citric acid, mix until dissolved
**Step 6** Add the Flavours + Heating agent, mix for 10 minutes

### Example 4

### A substantially sugar free Pseudoplastic Center fill composition using Xantham gum.

| **Material Description** | **% w/w** |
|---|---|
| GLYCERIN | 90.91 |
| CITRIC ACID ANHYDROUS | 3.00 |
| WATER DRINKING | 5.00 |
| XANTHAN GUM | 0.2500 |
| ASPARTAME | 0.0500 |
| SUCRALOSE | 0.0200 |
| ANTHOCANINS (COLOURANTS) | 0.1500 |
| HEATING AGENT: OPTAHEAT | 0.1500 |
| GUARANA EXTRACT | 4.1250 |
| TAURINE | 0.1000 |
| FLAVOURS | 0.2500 |
| | 100.0000 |

### Manufacturing instructions:

**Step 1** Weigh the Glycerine at room temperature into a suitable vessel
**Step 2** Add the Anthocyanins, Taurine + Guarana powders, mix until dispersed
**Step 3** Add the Xantham gum, mix until dispersed
**Step 4** Add the Water, heat the batch whilst mixing to 80°C
**Step 5** Stop heating, add the Sucrose + Citric acid, mix until dissolved
**Step 6** Add the Flavours + Heating agent, mix for 10 minutes

Suitable vessels for making the center fill compositions should be made of stainless steel or other food grade acceptable material which can easily be heated and cooled. Ideally the mixing vessels should have scraped wall mixers as well as a medium / high shear mixer. Suitable high shear mixers include static in-line mixers, jet mixers such as those manufactured by Ika GmbH, or rotor stator mixers such as those manufactured by Silverson Inc. Care must be taken when using high shear mixers that the pseudoplastic polymers are not broken into lower molecular weight components.

### Example 5 and 6

Hard boiled confectionary shell as used in the manufacture of center-filled sugar based candy. Example 5 is used in conjunction with examples 1(a) and 2 to 4. Example 6 is used in conjunction with example 1(b).

| **Material Description** | **5** | | **6** | |
|---|---|---|---|---|
| | Before cooking **% w/w** | After cooking **% w/w** | Before cooking **% w/w** | After cooking **% w/w** |
| SUCROSE | 48.4900 | 48.4900 | 48.4900 | 48.4900 |
| GLUCOSE SYRUP | 58.1653 | 46.5322 | 58.1653 | 46.5322 |
| WATER DRINKING | 16.0766 | 2.5000 | 16.0766 | 2.5000 |
| CITRIC ACID ANHYDROUS | 1.2000 | 1.2000 | 1.2000 | 1.2000 |
| ANHYDROUS CAFFEINE | 0.7781 | 0.7781 | 0.7781 | 0.7781 |
| COOLING AGENT: ULTRACOOL 2 | 0.3000 | 0.3000 | - | - |
| HEATING AGENT: OPTAHEAT | - | - | 0.300 | 0.300- |
| FLAVOUR PREMIX | 0.2000 | 0.2000 | 0.2000 | 0.2000 |
| | 125.2100 | | 125.210 | |
| | **Total** | 100.000 | **Total** | 100.000 |
| Processing/Moisture/Volatiles Loss | 25.2100 | - | 25.2100 | - |
| **Total** | 100.0000 | 100.0000 | 100.0000 | 100.0000 |

A preferred method of manufacture of the above confectionary formula is by continuous extrusion process as described in US 5,548,893 and in US 5.002,791. Any of the center fills of examples 1-4 may be suitable for use in this shell formula. Although the continuous extrusion process allows a high degree of flexibility in the center fill content for the above formula, a preferred target is an average 20% content.

## Claims

1. A confectionery composition comprising:
a. a xanthine derivative;
b. a cooling composition comprising a physiological cooling agent which has an average threshold for a reported cooling effect of 100µg or less amongst a test panel selected to have an average threshold for a reported cooling effect of 1-menthol of 0.25 µg; and
c. a warming composition comprising a physiological warming agent which has an average threshold for a reported warming effect of 100 µg or less amongst a test panel selected to have an average threshold for a reported warming effect of benzyl alcohol of 0.25 µg,
wherein said cooling composition and said warming composition are located in distinct and discrete regions within said confectionery composition and said cooling and warming compositions being adapted to provide sequential release profiles.

2. The confectionery composition according to claim 1 wherein the xanthine derivative comprises xanthine, caffeine, theobromine, theophylline, their salts or mixtures thereof, preferably caffeine.

3. The confectionery composition according to claim 1 or claim 2 wherein the composition comprises from 0.01% to 5% xanthine derivative, preferably from 0.05% to 2.5%, more preferably from 0.1% to 1% by weight of the confectionery composition.

4. The confectionery composition according to any one of the preceding claims wherein the cooling agent comprises menthol, monomenthyl glutarate, peppermint oil, 3-Imenthoxy propan-1,2-diol, N-ethyl-p-menthane-3 -carboxamide, trimethyl isopropyl butanamide, or mixtures thereof.

5. The confectionery composition according to any one of the preceding claims comprising from 0.001% to 10% cooling agent, by weight of the composition.

6. The confectionery composition according to any one of the preceding claims wherein the warming agent comprises vanillyl alcohol n-butyl ether, vanillyl alcohol n-propyl ether, vanillyl alcohol isopropyl ether, vanillyl alcohol isobutyl ether, vanillyl alcohol n-amino ether, vanillyl alcohol isoamyl ether, vanillyl alcohol n-hexyl ether, vanillyl alcohol methyl ether, vanillyl alcohol ethyl ether, gingerol, shogaol, paradol, zingerone, capsaicin, dihydrocapsaicin, nordihydrocapsaicin, homocapsaicin, homodihydrocapsaicin, ethanol, iso-propyl alcohol, iso-amylalcohol, benzyl alcohol, chloroform, eugenol, cinnamon oil, cinnamic aldehyde, or mixtures thereof.

7. The confectionery composition according to any one of the preceding claims comprising from 0.001% to 10% warming agent, preferably from 0.005% to 5%, more preferably from 0.005% to 1% by weight of the composition.

8. The confectionery composition according to any one of the preceding claims wherein the composition is in the form of a centre-fill throat drop comprising from 60% to 95% candy shell and from 5% to 40% filling, by weight of the drop, the candy shell comprising the cooling composition and the filling comprising the warming composition.

9. The confectionery composition according to claim 8 wherein the filling comprises less than 7% water, preferably less than 6% water by weight of the filling.

10. The confectionery composition according to claim 8 or claims 9 wherein the filling is shear thinning.

## Patentansprüche

1. Süßigkeitenzusammensetzung, umfassend:
a. ein Xanthinderivat;
b. eine Kühlungszusammensetzung, die ein physiologisches Kühlungsmittel umfasst, das einen durchschnittlichen Schwellenwert für eine mitgeteilte Kühlwirkung von 100 µg oder weniger unter einem Test-Panel aufweist, das so ausgewählt ist, dass es einen durchschnittlichen Schwellenwert für eine mitgeteilte Kühlwirkung von 1-Menthol von 0,25 µg aufweist; und
c. eine Erwärmungszusammensetzung, die ein physiologisches Erwärmungsmittel umfasst, das einen durchschnittlichen Schwellenwert für eine mitgeteilte Erwärmungswirkung von 100 µg oder weniger unter einem Test-Panel aufweist, das so ausgewählt ist, dass es einen durchschnittlichen Schwellenwert für eine mitgeteilte Erwärmungswirkung von Benzylakohol von 0,25 µg aufweist,
wobei die Kühlungszusammensetzung und die Erwärmungszusammensetzung in unterschiedlichen und voneinander getrennten Bereichen innerhalb der Süßigkeitenzusammensetzung angeordet sind und die Kühlungs- und Erwärmungszusammensetzungen so ausgelegt sind, dass sie sequentielle Freisetzungsprofile bereitstellen.

2. Süßigkeitenzusammensetzung nach Anspruch 1, wobei das Xanthinderivat Xanthin, Koffein, Theobromin, Theophyllin, deren Salze oder Mischungen davon, vorzugsweise Koffein umfasst.

3. Süßigkeitenzusammensetzung nach Anspruch 1 oder 2, wobei die Zusammensetzung, bezogen auf das Gewicht der Süßigkeitenzusammensetzung, 0,01 Gew.-% bis 5 Gew.-%, vorzugsweise 0,05 Gew.-% bis 2,5 Gew.-%, mehr bevorzugt 0,1 Gew.-% bis 1 Gew.-% Xanthinderivat umfasst.

4. Süßigkeitenzusammensetzung nach einem der vorhergehenden Ansprüche, wobei das Kühlungsmittel Menthol, Monomenthylglutarat, Pfefferminzöl, 3-1-Menthoxypropan-1,2-diol, N-Ethyl-p-menthan-3-carboxamid, Trimethylisopropylbutanamid oder Mischungen davon umfasst.

5. Süßigkeitenzusammensetzung nach einem der vorhergehenden Ansprüche, umfassend zu 0,001 Gew.-% bis 10 Gew.-% der Zusammensetzung ein Kühlungsmittel.

6. Süßigkeitenzusammensetzung nach einem der vorhergehenden Ansprüche, wobei das Erwärmungsmittel Vanillylalkohol-n-butylether, Vanillylalkohol-n-propylether, Vanillylalkoholisopropylether, Vanillylalkoholisobutylether, Vanillylalkohol-n-aminoether, Vanillylalkoholisoamylether, Vanillylalkohol-n-hexylether, Vanillylalkoholmethylether, Vanillylalkoholethylether, Gingerol, Shogaol, Paradol, Zingeron, Capsaicin, Dihydrocapsaicin, Nordihydrocapsaicin, Homocapsaicin, Homodihydrocapsaicin, Ethanol, Isopropylalkohol, Isoamylalkohol, Benzylalkohol, Chloroform, Eugenol, Zimtöl, Zimtaldehyd oder Mischungen davon umfasst.

7. Süßigkeitenzusammensetzung nach einem der vorhergehenden Ansprüche, umfassend zu 0,001 Gew.-% bis 10 Gew.-%, vorzugsweise zu 0,005 Gew.-% bis 5 Gew.-%, mehr bevorzugt zu 0,005 Gew.-% bis 1 Gew.-% der Zusammensetzung ein Erwärmungsmittel.

8. Süßigkeitenzusammensetzung nach einem der vorhergehenden Ansprüche, wobei die Zusammensetzung in Form eines Halsbonbons mit zentraler Füllung vorliegt, das zu 60 Gew.-% bis 95 Gew.-% des Bonbons einen Zuckerüberzug und zu 5 Gew.-% bis 40 Gew.-% eine Füllung umfasst, wobei der Zuckerüberzug die Kühlzusammensetzung aufweist und die Füllung die Erwärmungszusammensetzung aufweist.

9. Süßigkeitenzusammensetzung nach Anspruch 8, wobei die Füllung, bezogen auf das Gewicht der Füllung, weniger als 7 Gew.-% Wasser, vorzugsweise weniger als 6 Gew.-% Wasser umfasst.

10. Süßigkeitenzusammensetzung nach Anspruch 8 oder 9, wobei die Füllung strukturviskos ist.

## Revendications

1. Composition en confiserie comprenant :
a. un dérivé de xanthine ;
b. une composition refroidissante comprenant un agent de refroidissement physiologique qui a un seuil moyen de l'effet refroidissant rapporté de 100 µg ou moins parmi un jury témoin choisi pour avoir un seuil moyen de l'effet refroidissant rapporté du 1-menthol de 0,25 µg; et
c. une composition réchauffante comprenant un agent réchauffant physiologique dont un seuil moyen de l'effet réchauffant rapporté est de 100 µg ou moins parmi un jury témoin choisi pour avoir un seuil moyen de l'effet réchauffant rapporté de l'alcool benzylique de 0,25 µg,
dans laquelle ladite composition refroidissante et ladite composition réchauffante sont situées dans des régions distinctes et individuelles au sein de ladite composition en confiserie et dans laquelle lesdites compositions refroidissante et réchauffante sont adaptées pour fournir des profils de libération séquentiels.

2. Composition en confiserie selon la revendication 1, dans laquelle le dérivé de xanthine comprend de la xanthine, de la caféine, de la théobromine, de la théophylline, leurs sels ou leurs mélanges, de préférence de la caféine.

3. Composition en confiserie selon la revendication 1 ou la revendication 2, dans laquelle la composition comprend de 0,01 % à 5 % de dérivé de xanthine, de préférence de 0,05 % à 2,5 %, plus préférablement de 0,1 % à 1 % en poids de la composition en confiserie.

4. Composition en confiserie selon l'une quelconque des revendications précédentes, dans laquelle l'agent refroidissant comprend du menthol, du glutarate de monomenthyl, de l'huile de menthe poivrée, du 3-1 menthoxy propane-1,2-diol, du N-éthyl-p-menthane-3
- carboxamide, du triméthyl isopropyl butanamide, ou leurs mélanges.

5. Composition en confiserie selon l'une quelconque des revendications précédentes, comprenant de 0,001 % à 10 % d'agent refroidissant, en poids de la composition.

6. Composition en confiserie selon l'une quelconque des revendications précédentes, dans laquelle l'agent réchauffant comprend du n-butyl éther d'alcool vanillylique, du n-propyl éther d'alcool vanillylique, de l'isopropyl éther d'alcool vanillylique, de l'isobutyl éther d'alcool vanillylique, du n-amino éther d'alcool vanillylique, de l'isoamyl éther d'alcool vanillylique, du n-hexyl éther d'alcool vanillylique, du méthyl éther d'alcool vanillylique, de l'éthyl éther d'alcool vanillylique, du gingérol, du shogaol, du paradol, du zingérone, de la capsaïcine, de la dihydrocapsicine, de la nor-dihydrocapsicine, de l'homocapsicine, de l'homodihydrocapsicine, de l'éthanol, de l'alcool iso-propylique, de l'alcool iso-amyle, de l'alcool benzylique, du chloroforme, de l'eugénol, de l'huile de cannelle, de l'aldéhyde cinnamique, ou leurs mélanges.

7. Composition en confiserie selon l'une quelconque des revendications précédentes, comprenant de 0,001 % à 10 % d'agent réchauffant, de préférence de 0,005 % à 5 %, plus préférablement de 0,005 % à 1 % en poids de la composition.

8. Composition en confiserie selon l'une quelconque des revendications précédentes, dans laquelle la composition est sous la forme d'une pastille pour la gorge fourrée à l'intérieur comprenant de 60 % à 95 % d'une enveloppe pour bonbon et de 5 % à 40 % de remplissant, en poids de la goutte, l'enveloppe pour bonbon comprenant la composition refroidissante et le remplissant comprenant la composition réchauffante.

9. Composition en confiserie selon la revendication 8, dans laquelle le remplissant comprend moins de 7 % d'eau, de préférence moins de 6 % d'eau en poids du remplissant.

10. Composition en confiserie selon la revendication 8 ou la revendication 9, dans laquelle le remplissant se fluidifie par cisaillement.
